# EUROPÄISCHE PATENTSCHRIFT

(11) **EP 3 250 409 B1**
(45) Veröffentlichungstag und Bekanntmachung des Hinweises auf die Patenterteilung: **31.10.2018**
(21) Anmeldenummer: 16702681.4
(22) Anmeldetag: 27.01.2016
(51) Int. Cl.: B60K 15/05, E05C 19/02, E05B 81/20, E05B 81/28, E05B 83/34

(54) **BETÄTIGUNGSVORRICHTUNG FÜR EIN BEWEGLICHES TEIL**
ACTUATING DEVICE FOR A MOVABLE PART
DISPOSITIF D'ACTIONNEMENT POUR UNE PIÈCE MOBILE

(30) Priorität: 30.01.2015 DE 102015001180
(43) Veröffentlichungstag der Anmeldung: 06.12.2017
(73) Patentinhaber: HELLA GmbH & Co. KGaA, 59552 Lippstadt (DE)
(72) Erfinder: HUSBERG, Olaf, 34414 Warburg (DE); IRLE, Henning, 59557 Lippstadt (DE); NIEMEYER, Ingo, 59519 Möhnesee (DE)
(86) Internationale Anmeldenummer: PCT/EP2016/051699
(87) Internationale Veröffentlichungsnummer: WO 2016/120324

(56) Entgegenhaltungen:
- EP-A1- 1 785 307
- KR-A- 20110 138 912
- US-A1- 2009 299 502
- US-A1- 2010 045 049

## Beschreibung

Die vorliegende Erfindung betrifft eine Betätigungsvorrichtung für ein bewegliches Teil, insbesondere eine Abdeckung einer Karosserieöffnung.

Es ist bekannt, dass Abdeckungen wie z.B. Tankdeckel für Fahrzeuge und Schubladen von Möbeln Schließvorrichtungen aufweisen, die über einen sogenannten Push-Push Mechanismus ver- und entriegelt werden können. Diese Push-Push Funktionen sind auch aus Kugelschreibern bekannt, wobei ein Stift mithilfe einer Feder in einer Herzkurvenmechanik bewegt wird, sodass allein durch Drücken des Betätigungsknopfes der Stift sowohl ausgefahren als auch eingezogen wird. Aus der gattungsbildenden US2010045049 A1 ist ein solcher Push-Push Verriegelungsmechanismus bekannt, der ein bewegliches Teil öffnet oder verschließt, wobei der Mechanismus über eine Herzkurvenmechanik verfügt.

Ein Push-Push Mechanismus für einen Tankdeckel eines Fahrzeugs ist auch aus der DE 10 2014 106 846 A1 bekannt.

Nachteilhaft bei den bekannten Lösungen sind die hohen Aufwände bei Verwendung von separaten Sensoren und Aktuatoren, sowie die dazugehörige komplizierte Verkabelung. Darüber hinaus handelt es sich bei den aufwendigen und zum Teil fehlerträchtigen Push-Push Elementen um großvolumige Lösungen, die darüber hinaus eine relativ große Masse aufweisen.

Es ist Aufgabe der vorliegenden Erfindung, die voranstehend beschriebenen Nachteile zumindest teilweise zu beheben. Insbesondere ist es Aufgabe der vorliegenden Erfindung, in kostengünstiger und einfacher Weise Gewicht durch den Entfall mechanischer und elektromotorischer Komponenten einzusparen und eine verbesserte Kombination aus mechanischen und elektronischen Komponenten zu realisieren.

Voranstehende Aufgabe wird gelöst durch eine Betätigungsvorrichtung für ein bewegliches Teil mit den Merkmalen des unabhängigen Vorrichtungsanspruchs. Weitere Merkmale und Details der Erfindung ergeben sich aus den Unteransprüchen, der Beschreibung und den Zeichnungen.

Eine erfindungsgemäße Betätigungsvorrichtung dient zur Freigabe eines beweglichen Teils, wobei unter Freigabe eine sensorische und eine mechanische Freigabe zu verstehen ist. Hierfür weist die Betätigungsvorrichtung zumindest ein Betätigungsmittel und ein elektromechanisches Schaltelement auf, wobei das elektromechanische Schaltelement aus einem ersten Modus in einen zweiten Modus durch das Betätigungsmittel bringbar ist, sodass in dem ersten Modus das elektromechanische Schaltelement eine Betätigung durch das Betätigungsmittel sensiert und in dem zweiten Modus das elektromechanische Schaltelement das Betätigungsmittel freigibt und das Betätigungsmittel in Richtung bewegliches Teil bewegbar ist. Eine erfindungsgemäße Betätigungsvorrichtung zeichnet sich dadurch aus, dass durch Betätigung des elektromechanischen Schaltelementes durch das Betätigungsmittel ein Wechsel zwischen dem ersten und dem zweiten Modus und umgekehrt realisierbar ist.

Eine erfindungsgemäße Betätigungsvorrichtung basiert also auf dem Einsatz eines Sensor-Aktor Moduls, welches sich standardmäßig in dem ersten Modus befindet, in dem eine Betätigung durch das Betätigungsmittel sensiert werden kann und erst nach der Betätigung das elektromechanische Schaltelement in einen zweiten Modus geschaltet wird, in dem es als Aktor funktioniert.

Hierdurch entsteht ein On-Demand Ansprechen der Verriegelung, wodurch sich mechanische Komponenten, wie sie in bisherigen Systemen verwendet werden, einsparen lassen. So kann zum Beispiel auf die Herzkurvenmechanik des Push-Push Elementes verzichtet werden, was die Kosten reduziert und die Zuverlässigkeit sowie die Langlebigkeit erhöht. Aus der signifikanten Reduktion der Bauteile und des Bauraums resultieren eine verlängerte Lebensdauer des Aktors sowie eine kostengünstige und gewichtssparende Konstruktion. Dementsprechend kann der Aktor durch eine einfache Konstruktion, welche auch kostengünstig ist, an die neuen Lebensdaueranforderungen angepasst werden. In dem zweiten Modus ist das Betätigungsmittel freigegeben, sodass sich dieses in Richtung des beweglichen Teils bewegt und eine Positionsänderung des beweglichen Teils hervorruft, sodass das bewegliche Teil von einem Benutzer derart erreichbar ist, dass dieser das bewegliche Teil in seiner Position verändern kann. Dabei ist es denkbar, dass das bewegliche Teil sich ursprünglich in einer Schließstellung befindet, in der es dem Benutzer nicht gestattet oder möglich ist das bewegliche Teil aus der Schließposition zu bewegen. Gibt das elektromechanische Schaltelement das Betätigungsmittel frei, sodass das Betätigungsmittel in Richtung bewegliches Teil bewegbar ist und das bewegliche Teil aus seiner Ursprungsposition heraus bewegt wird, kann der Anwender dieses greifen oder derart mit einer Kraft beaufschlagen, dass der Zugang zu der verdeckten Öffnung gewährt ist. Es ist jedoch darauf hinzuweisen, dass der Wechsel aus dem ersten Modus in den zweiten Modus auch umgekehrt durchführbar ist, sodass durch Betätigung des elektromechanischen Schaltelementes durch das Betätigungsmittel, das elektromechanische Schaltelement aus dem zweiten Modus in den ersten Modus bringbar ist. Somit kann erreicht werden, dass das bewegliche Teil zurück in seine ursprüngliche Position bewegt wird, bei der das Betätigungsmittel in die entgegengesetzte Richtung, also vom beweglichen Teil weg bewegt wird und das elektromechanische Schaltelement sich danach wieder in dem ersten Modus befindet, in dem eine Betätigung durch das Betätigungsmittel sensiert werden kann. Erfindungsgemäß besteht zwischen dem Betätigungsmittel und dem beweglichen Teil eine Wirkverbindung, die es ermöglicht eine Kraft zu übertragen. Dabei kann das Betätigungsmittel beispielsweise an dem beweglichen Teil befestigt oder mit diesem einteilig ausgestaltet sein. Aufgrund der Verbindung bewegt sich das Betätigungsmittel im Falle einer Bewegung des beweglichen Teils mit. Dabei kann das Betätigungsmittel komplett aus dem elektromechanischen Schaltelement heraus bewegt werden. Bei einem Schließvorgang, bei dem das bewegliche Teil in seine Ursprungsposition bewegt wird, wird das Betätigungsmittel dabei in, durch bzw. an dem elektromechanischen Schaltelement vorbei bewegt, sodass es je nach Ausführung möglich ist hier erneut eine Kapazitätsänderung zu sensieren. Eine weitere Möglichkeit besteht darin, das bewegliche Teil und das Betätigungsmittel über eine Hakenverbindung zu verbinden. Nach der Freigabe von dem Betätigungsmittel durch das elektromechanische Schaltelement, kann sich das Betätigungsmittel auf einer Kreisbahn bewegen, wodurch im geöffneten Zustand, der Haken nicht mehr in Wirkverbindung mit dem Betätigungsmittel steht. Dabei kann der Haken sowohl an dem beweglichen Teil als auch an dem Betätigungsmittel angebracht sein.

Es kann von Vorteil sein, wenn bei einer erfindungsgemäßen Betätigungsvorrichtung eine Elektronikeinheit die Modi des elektromechanischen Schaltelements steuert. Hierfür wird das elektromechanische Schaltelement mit der Elektronikeinheit derart verbunden, dass bei einer Sensierung einer Betätigung durch das Betätigungsmittel ein Signal an die Elektronikeinheit gesendet wird, dieses von der Elektronikeinheit ausgewertet wird und ein entsprechendes Signal an das elektromechanische Schaltelement zurücksendet. Dadurch kann ein Wechsel aus dem ersten Modus in den zweiten Modus und umgekehrt gesteuert werden. Das elektromechanische Schaltelement erkennt also im ersten Modus eine Krafteinwirkung durch das Betätigungsmittel, was durch die Elektronikeinheit ausgewertet wird und entscheidet ob ein Moduswechsel des elektromechanischen Schaltelementes durchgeführt werden soll. Die Elektronikeinheit kann außerdem dazu genutzt werden etwaige Totzeiten zu steuern, die dazu da sind, dass unerwünschte und fälschlicherweise durchgeführte Moduswechsel zustande kommen, die durch fälschlicherweise getätigte Betätigung des Betätigungsmittels hervorgerufen werden. Kommt es während einer genannten Totzeit zu einer weiteren Sensierung durch das Betätigungsmittel, so kann das fälschlicherweise als Wunsch zum freigegeben des Betätigungsmittels interpretiert werden, obwohl lediglich die Absicht besteht, das bewegliche Teil und somit das Betätigungsmittel in seine ursprüngliche Position zurück zu bewegen. Folglich wird diese Fehlfunktion vorteilhaft durch den Einsatz einer erfindungsgemäßen Elektronikeinheit verhindert.

Erfindungsgemäß ist es denkbar, dass an dem Betätigungsmittel ein erstes Federelement wirkt, wodurch das Betätigungsmittel in seiner Position veränderbar ist. Hierbei steht das Betätigungsmittel in Wirkverbindung mit dem Federelement, sodass dieses mit einer Federkraft beaufschlagbar ist. Folglich kann das Betätigungsmittel durch die von dem Federelement aufgebrachte Federkraft im freigegebenen Zustand in seiner Position verändert werden. Hierfür entspannt sich die Feder, wodurch eine Bewegungsänderung des Betätigungsmittels folgt, sodass das Betätigungsmittel in Richtung bewegliches Teil bewegbar ist.

Vorteilhaft ist es ebenfalls, wenn an dem elektromechanischen Schaltelement ein Verriegelungsmechanismus angeordnet ist, der durch das elektromechanische Schaltelement in eine Offenstellung und eine Schließstellung bringbar ist, insbesondere dass der Verriegelungsmechanismus in Wirkverbindung mit zumindest einem zweiten Federelement steht. Der Verriegelungsmechanismus dient dazu, das Betätigungsmittel an einer Bewegung in Richtung des beweglichen Teils zu hindern, wenn sich dieser in der Schließstellung befindet. Eine mechanische Wirkverbindung zwischen dem Verriegelungsmechanismus und dem Betätigungsmittel verhindert hierbei, dass das Betätigungsmittel entweder durch das erste Federelement oder durch eine Krafteinwirkung auf das Betätigungsmittel von außen, dieses sich Richtung bewegliches Teil bewegt. In der Offenstellung des Verriegelungsmechanismus gibt dieser das Betätigungsmittel frei, sodass das Betätigungsmittel in Richtung bewegliches Teil bewegbar ist. Der Verriegelungsmechanismus verhindert hierbei erfolgreich, dass bei Ausfall oder Fehlfunktion des elektromechanischen Schaltelementes, das Betätigungsmittel sich in Richtung bewegliches Teil bewegt, und eine Öffnung fälschlicherweise freigibt. Dabei kann es vorteilhaft sein, wenn der Verriegelungsmechanismus in Wirkverbindung mit zumindest einem zweiten Federelement steht. Im ersten Modus drückt das zweite Federelement dabei den Verriegelungsmechanismus in Richtung des elektromechanischen Schaltelementes, sodass eine Bewegung des Betätigungsmittels in Richtung des beweglichen Teils unterbunden ist. In dem zweiten Modus wirkt eine Kraft des elektromechanischen Schaltelementes auf den Verriegelungsmechanismus und somit entgegen des zweiten Federelementes, wobei der Kraftbetrag des elektromechanischen Schaltelementes größer als der Kraftbetrag des zweiten Federelementes ist, sodass der Verriegelungsmechanismus aus der Schließstellung in die Offenstellung bringbar ist. Vorteilhafterweise befindet sich der Verriegelungsmechanismus in der Schließstellung, wenn das elektromechanische Schaltelement sich im ersten Modus befindet. Umgekehrt ist es vorteilhaft, wenn der Verriegelungsmechanismus sich in einer Offenstellung befindet wenn das elektromechanische Schaltelement sich im zweiten Modus befindet.

Es ist erfindungsgemäß denkbar, dass ein mechanischer Notfallmechanismus vorgesehen ist, womit das bewegliche Teil rein mechanisch betätigbar ist, insbesondere in eine Offenstellung bringbar ist. Dabei kann durch den Notfallmechanismus, die Wirkverbindung zwischen dem beweglichen Teil und dem Betätigungsmittel getrennt werden, sodass das bewegliche Teil auch im Fall eines Stromausfalls zumindest geöffnet werden kann. Dabei kann der Notfallmechanismus z.B. mit einem Bowdenzug betätigt werden, der an einer zugänglichen Stelle von einem autorisierten Benutzer betätigbar ist. Insbesondere kann der Notfallmechanismus nur im Notfall betätigt werden, sodass ausgeschlossen werden kann, dass ein nicht autorisierter Benutzer, das bewegliche Teil öffnen kann.

Ein weiterer Vorteil ist erzielbar, wenn das elektromechanische Schaltelement ein elektroaktives Polymer oder eine Formgedächtnislegierung oder ein Piezoelement aufweist. Alle drei Formen können in die Kategorie der künstlichen Muskeln eingeordnet werden und kennzeichnen sich dadurch, dass die zur Anwendung kommenden Materialien sowohl als Sensor als auch als Aktor funktionieren. Bei den elektroaktiven Polymeren (EAPs) unterscheidet man nach Hauptgruppen, den ionischen und elektronischen EAPs, die sich noch in weitere Untergruppen aufteilen lassen. Die Wirkweise der EAPs wird im Folgenden, ohne beschränkt auf diese zu sein, an Hand der dielektrischen EAPs, eine Untergruppe der elektronischen EAPs, erläutert. Der prinzipielle Aufbau ähnelt dabei der Funktionsweise von Plattenkondensatoren mit mechanisch dehnbarem Dielektrikum und lässt sich dadurch sowohl als Sensoren als auch als Aktoren einsetzen. Folglich wird in dem ersten Modus eine Betätigung durch das Betätigungsmittel durch eine Kapazitätsänderung sensiert, die infolge einer Krafteinwirkung auf das elektromechanische Schaltelement, also den künstlichen Muskeln, ausgeübt wird, wodurch sich das dehnbare Dielektrikum des elektromechanischen Schaltelements verformt. Die Wirkungsweise elektroaktiver Polymere beruht auf einem elektronischen Ladungstransport. Die Vorteile von elektroaktiven Polymeren ergeben sich aufgrund der hohen erreichbaren Dehnungen, die erreicht werden können, sowie die geringe Dichte der Polymere und die freie Formbarkeit. Dementsprechend handelt es sich um leichte, flexible und geräuschlose Aktoren, die eine hohe Energiedichte aufweisen. Die gekapselten Aktoren, die je nach Belastung nahezu unter allen Umgebungsbedingungen einsetzbar sind weisen darüber hinaus sehr niedrige Materialkosten auf. In dem zweiten Modus, in dem das elektromechanische Schaltelement als Aktor funktioniert, wird eine elektrische Spannung an die Elektroden des elektromechanischen Schaltelements angelegt, sodass das Dielektrikum aufgrund der sich anziehenden Ladung gestaucht wird und eine Dehnung erfährt, die senkrecht zur Feldrichtung verläuft. Der elektrostatische Druck, welcher die Deformation verursacht, wird unter anderem durch die angelegte Spannung bestimmt. Beim Einsatz von Formgedächtnislegierung handelt es sich um Werkstoffe, die bei einer bestimmten Temperatur eine reversible Gefügeumwandlung durchlaufen, welche mit einer Änderung der äußeren Geometrie einhergeht. Aufgrund des guten Temperaturverhaltens durch elektrischen Strom können Stellbewegungen einfach realisiert werden, wodurch sich eine kostengünstige Lösung ergibt. Darüber hinaus bieten Formgedächtnislegierungen den Vorteil, dass diese in ihre ursprüngliche Formgebung zurück gewandelt werden, wenn keine thermische Energie mehr hinzugefügt wird. Formgedächtnislegierungen können sehr große Kräfte ohne auffallende Ermüdung übertragen und besitzen ein hohes spezifisches Arbeitsvermögen bei gleichzeitig geringem Bauraum. Piezoelemente sind keramische Sensor-Aktor Module und sind insbesondere für den Einsatz unter rauen Umgebungsbedingungen einsetzbar. Diese machen sich den Effekt zu Nutze, um entweder durch Anlegen einer Spannung eine mechanische Bewegung auszuführen, oder bei Einwirkung einer mechanischen Kraft eine elektrische Spannung, und somit ein Signal, zu erzeugen. Piezoelemente können dabei bestimmte Kristalle oder piezoelektrische Keramiken, also polykristalline Materialien sein, welche bei kleinerer Spannung eine Formänderung ergeben. Erfindungsgemäß ist es darüber hinaus denkbar dass eine Kombination der zuvor genannten Ausführungen, d.h. elektroaktive Polymere, Formgedächtnislegierung oder Piezoelemente zum Einsatz kommt. Hierbei können zum Beispiel die eine Ausführungsart als Sensor und ein anderer als Aktor ausgelegt werden.

Ein weiterer Vorteil ist dadurch erzielbar, dass das Betätigungsmittel zumindest ein Aktivierungselement und/oder zumindest ein Druckelement aufweist. Das Aktivierungselement hat dabei die Aufgabe, das elektromechanische Schaltelement insbesondere im ersten Modus mit einer Kraft zu beaufschlagen, sodass diese durch das elektromechanische Schaltelement sensiert werden kann. Dabei ist es zum Beispiel denkbar, dass das Aktivierungselement eine entsprechende Formgebung aufweist, die eine Kapazitätsänderung in dem elektromechanischen Schaltelement hervorruft, wodurch ein spezifisches Signal erzeugbar ist, das zu einem Wechsel in den zweiten Modus führt. Das Aktivierungselement kann dabei derart ausgestaltet sein, dass das elektromechanische Schaltelement in horizontaler oder vertikaler Richtung gestaucht wird. Dementsprechend kann es sich zum Beispiel um eine stiftartige Formgebung handeln oder eine konisch bzw. spitz zulaufende Form des Betätigungsmittels sein. Folglich kann es sich um zusätzlich angebrachte Elemente an dem Betätigungsmittel oder um Formgebungen handeln, die unmittelbar durch das Betätigungsmittel selbst vorgegeben werden können. Ein erfindungsgemäßes Druckelement kann zum Beispiel eine Blockierfunktion für das Betätigungsmittel bzw. eine Missbrauchserkennung ermöglichen. Dabei weist das Betätigungsmittel an zumindest einem Ende eine spezielle Form oder ein speziell ausgeformtes Element auf, das derart ausgestaltet ist, dass eine Bewegung des Betätigungsmittels aus der Betätigungsvorrichtung verhindert wird. Dabei sind die geometrischen Maße des Druckelementes derart konstruiert, dass bei einer Bewegung in Richtung des elektromechanischen Schaltelementes hierdurch ebenfalls eine mechanische Kraft auf dieses ausgeübt wird, so dass das elektromechanische Schaltelement hierdurch verformt und somit ein Signal erzeugt wird. Befindet sich das elektromechanische Schaltelement hierbei im ersten Modus so dient das Blockierelement außerdem dazu, dass das Betätigungsmittel nicht aus der Betätigungsvorrichtung herausbewegbar ist, sondern durch das elektromechanische Schaltelement und die geometrische Form des Druckelementes eine Blockierfunktion ergeben, da das Druckelement größer ausgestaltet ist als der Platz, welcher sich zwischen dem elektromechanischen Schaltelement befindet. Das Druckelement bildet somit das eine Ende des elektromechanischen Schaltelementes, welches sich an dem entgegengesetzten Ende des Aktivierungselements befindet.

Es ist erfindungsgemäß denkbar, dass das elektromechanische Schaltelement und/oder die Elektronikeinheit mit einer Zentralverrieglung und/oder einem Passiv-Entry System eines Fahrzeugs verbindbar ist. Dies hat den Vorteil, dass zumindest ein elektromechanisches Schaltelement und/oder die Elektronikeinheit ein Signal empfangen kann, dass eine Modusänderung in dem elektromechanischen Schaltelement bzw. einen Befehl in der Elektronikeinheit für die Modusänderung im elektromechanischen Schaltelement hervorrufen kann. Folglich kann schon vor einer Betätigung des Betätigungsmittels durch eine Kraftaufbringung auf das bewegliche Teil, eine Modusänderung oder eine Vorwarnung zur Modusänderung hergestellt werden. So ist es zum Beispiel denkbar, dass das elektromechanische Schaltelement sich zuvor in einem Stand-by oder Schlafmodus befindet, in dem nur ein geringer Energieverbrauch besteht und durch ein Passiv-Entry bzw. eine Zentralverriegelung dieses aufgeweckt wird, und in den ersten oder zweiten Modus geschaltet werden kann. Dementsprechend wird ein Öffnungswunsch sensiert, der für eine autorisierte bzw. On-Demand Öffnung des beweglichen Teils durch die Elektronikeinheit auswertbar ist.

Ein weiterer Vorteil ist dadurch erzielbar, dass zumindest ein weiteres elektromechanisches Schaltelement vorgesehen ist, dass derart ausgebildet ist, einen autorisierten Öffnungsvorgang zu sensieren. Hierbei kann das weitere elektromechanische Schaltelement entweder nur als Sensor, nur als Aktor oder als Sensor-Aktor Modul ausgestaltet sein. Dies führt dazu, dass insbesondere eine Missbrauchserkennung sensiert bzw. detektiert werden kann, die zum Beispiel durch eine unsachgemäße Öffnung bzw. durch Vandalismus hervorgerufen wird. Hierdurch kann zum Beispiel ein Warnsignal erzeugt werden, dass den Missbrauch der Betätigungsvorrichtung signalisiert und ein gewaltsames Öffnen sensiert. Eine Missbrauchserkennung funktioniert dabei derart, dass das weitere elektromechanische Schaltelement durch ein Aufbringen von mechanischer Kraft auf das bewegliche Teil in einer Offenstellung, in der die Öffnung freigegeben wird, bewegt wird, so dass das Druckelement eine Kraft auf das zumindest zweite elektromechanische Schaltelement ausübt und somit eine Kapazitätsänderung hervorruft, die von der Elektronikeinheit erfasst wird. Aufgrund der geometrischen Form des Druckelementes blockiert dieses mechanisch am weiteren elektromechanischen Schaltelement und verhindert, dass das bewegliche Teil gewaltsam geöffnet werden kann. Je nach Zustand der Zentralverrieglung bzw. des Passiv-Entry Systems kann die Elektronikeinheit entweder kurz warnen, dass dies die falsche Art zum öffnen des beweglichen Teils ist, oder es kann ein dauerhaftes Warnsignal geben und auf ein nicht befugtes Öffnen des beweglichen Teils hingewiesen werden.

Erfindungsgemäß ist es denkbar, dass das elektromechanische Schaltelement erst nach Sensierung in den zweiten Modus schaltbar ist. Dementsprechend befindet sich das elektromechanische Schaltelement in dem Ursprungszustand in dem ersten Modus und wird erst nach Sensierung, zum Beispiel durch das Betätigungsmittel und/oder einer Zentralverrieglung und/oder einem Passiv-Entry System in den zweiten Modus geschaltet. Dadurch wird erreicht, dass ein ungewolltes Freigeben des Betätigungsmittels durch das elektromechanische Schaltelement verhindert wird. Das erhöht zum einen die Sicherheit und zum anderen die Ausfallwahrscheinlichkeit der Betätigungsvorrichtung.

Weitere, die Erfindung verbessernde Maßnahmen ergeben sich aus der nachfolgenden Beschreibung zu einigen Ausführungsbeispielen der Erfindung, welche in den Figuren schematisch dargestellt sind. Sämtliche aus den Ansprüchen, der Beschreibung oder der Zeichnung hervorgehende Merkmale und/oder Vorteile, einschließlich konstruktiver Einzelheiten, räumliche Anordnungen und Verfahrensschritten, können sowohl für sich als auch in den verschiedensten Kombinationen erfindungswesentlich sein. Dabei ist zu beachten, dass die Figuren nur beschreibenden Charakter haben und nicht dazu gedacht sind, die Erfindung in irgendeiner Form einzuschränken.

Anhand der beigefügten Zeichnungen wird die Erfindung nachfolgend näher erläutert. Dabei zeigt:
- Fig. 1: eine erste Ausführungsform einer erfindungsgemäßen Betätigungsvorrichtung
- Fig. 2: eine zweite Ausführungsform einer erfindungsgemäßen Betätigungsvorrichtung
- Fig. 3: eine dritte Ausführungsform einer erfindungsgemäßen Betätigungsvorrichtung
- Fig. 4: eine schematische Darstellung der erfindungsgemäßen Elektronikeinheit

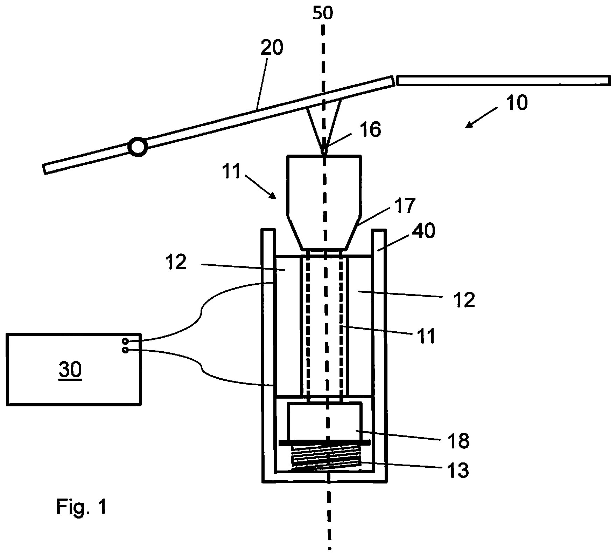

In Figur 1 ist eine erste Ausführungsform der erfindungsgemäßen Betätigungsvorrichtung 10 dargestellt. In der abgebildeten Form befindet sich das elektromechanische Schaltelement 12, ein Großteil des Betätigungsmittels 11, das Druckelement 18 sowie das erste Federelement 13 in einem Gehäuse 40. Das Gehäuse ist hierbei zylinderartig oder vieleckig geformt und ist zu der einen kurzen Seite hin geöffnet, sodass sich ein Teil des Betätigungsmittels 11 sowie des Aktivierungselements 17 aus dem Gehäuse 40 erstreckt. Das Betätigungsmittel 11 weist dabei ein Aktivierungselement 17 auf, welches sich an dem oberen Ende des Betätigungsmittels 11 befindet und somit aus dem Gehäuse 40 zumindest teilweise herauskommt, wobei das Aktivierungselement 17 zu der Seite, die zu bzw. in das Gehäuse hineinguckt, eine konisch oder schräg-plan zulaufende Gestaltung aufweist. Dadurch wird der Durchmesser respektive das Kantenmaße des Aktivierungselementes 17 gegenüber dem obersten Ende des Betätigungsmittels 11 um einen gewissen Anteil verkleinert. An dem konisch respektive schräg-plan zulaufenden Ende des Aktivierungselementes 17 ist ein zylinderförmiger Teil des Betätigungsmittels 11 angeordnet, wobei der zylinderförmige respektive vieleckige Teil des Betätigungsmittels 11 in seinem Durchmesser respektive Kantenmaß maximal die Größe des konischen bzw. schräg-planen Endes des Aktivierungselementes 17 aufweist. Dieser Teil des Betätigungsmittels 11 verläuft innerhalb des Gehäuses 40, in dem das elektromechanische Schaltelement 12 angeordnet ist. Somit wird der zylinderförmige bzw. vieleckige Teil des Betätigungsmittels 11 innerhalb des Gehäuses 40 von dem elektromechanischen Schaltelement 12 umgeben, sodass das elektromechanische Schaltelement 12 eine Kraft auf das Betätigungsmittel 11 ausüben kann und dieses durch das Schaltelement 12 gehalten wird. Alternativ kann sich das elektromechanische Schaltelement 12 auch nur auf einer Seite des Betätigungsmittels 11 befinden, wobei die Geometrie des Betätigungsmittels 11 entsprechend anzupassen und die Rückseite des Betätigungsmittels 11 in diesem Fall plan sein oder in ein er Führungsnut geführt wäre. An dem unteren Ende des Betätigungsmittels 11 befindet sich in Figur 1 das Druckelement 18, welches in seinem Durchmesser ebenfalls vergrößert gegenüber dem zylinderförmigen respektive vieleckigen Teil des Betätigungsmittels 11 ausgestaltet ist. An dem Druckelement 18 ist das erste Federelement 13 angeordnet, welches sich mit seinem einen Ende an dem Gehäuse 40 mit dem anderen Ende an dem Druckelement 18 abstützt. In der Figur 1 befindet sich die Betätigungsvorrichtung 10 und somit das elektromechanische Schaltelement 12 in dem erste Modus, in dem das bewegliche Teil 20 eine Öffnung verschließt. Das Betätigungsmittel 11 steht dabei in Wirkverbindung mit dem beweglichen Teil 20, wobei das Betätigungsmittel 11 über einen Notfallmechanismus 16 verfügt, durch den die Wirkverbindung zwischen dem Betätigungsmittel 11 und dem beweglichen Teil 20 getrennt werden kann. In der gezeigten Position befindet sich das Federelement 13 in einer gestauchten Stellung, wobei die Kraft des elektromechanischen Schaltelements, welche auf das Betätigungsmittel 11 wirken, größer ist als die Federkraft von dem Federelement 13. In dem dargestellten ersten Modus ist das elektromechanische Schaltelement 12 als Sensor geschaltet und ist mit der Elektronikeinheit 30 derart verbunden, dass eine Kapazitätsänderung des elektromechanischen Schaltelements 12 in Folge von mechanischer Krafteinwirkung durch das Betätigungsmittel 11 registriert und sensiert wird, wobei die Elektronikeinheit 30 darauf das elektromechanische Schaltelement 12 mit einer Spannung beaufschlagt, sodass dieses in den zweiten Modus, also in die Aktorfunktion, überführt wird. Schaltet die Elektronikeinheit 30 das elektromechanische Schaltelement 12 in den Aktormodus, so hat dies eine Formänderung des elektromechanischen Schaltelements 12 zur Folge, bei dem sich das elektromechanische Schaltelement 12 zusammenzieht, sodass keine Kräfte mehr von dem elektromechanischen Schaltelement 12 auf das Betätigungsmittel 11 wirken und das Druckelement 18 sich entsprechend in dem Gehäuse 40 in Richtung des beweglichen Teils 20 bewegen kann. Durch die Federkraft des Federelementes 13 wird das Betätigungsmittel 11 in Richtung des beweglichen Teils 20 bewegt, so dass aufgrund der Wirkverbindung zwischen dem Betätigungsmittel 11 bzw. dem Aktivierungselement 17 und dem beweglichen Teil 20, das bewegliche Teil 20 aufspringt bzw. die Öffnung zumindest teilweise freigibt. In dem nicht mehr dargestellten zweiten Modus, in dem das elektromechanische Schaltelement 12 als Aktor fungiert zieht sich das elektromechanische Schaltelement 12 derart zusammen, dass sich dieses in Richtung des Gehäuses 40 bewegt wird, sodass genügend Platz freigegeben wird, dass das Druckelement 18 sich in dem Gehäuse 40 in Richtung des beweglichen Teils 20 bewegen kann. Die Wirkverbindung zwischen dem Betätigungsmittel 11 und dem beweglichen Teil 20 kommt hierbei durch eine Hakenverbindung zustande, wobei der Haken an dem beweglichen Teil 20 auf einer Achse 50 angeordnet ist und über ein entsprechendes Gegenstück, das an dem Aktivierungselement 17 und auf der Achse 50 angeordnet ist, zusammenwirkt. Dabei kann die Verbindung zwischen dem beweglichen Teil 20 und dem Aktivierungselement 17 z.B. dadurch gelöst werden, dass sich das Betätigungsmittel 11 mit dem Aktivierungselement 17 derart auf einer Kreisbahn bewegt, dass der Haken an dem beweglichen Teil 20, durch das entsprechende Gegenstück, welches sich auf der Kreisbahn mit dem Aktivierungselement 17 bewegt, freigegeben werden. Die Drehbewegung des Betätigungsmittels 11 bzw. des Aktivierungselements 17 kann dabei ebenfalls durch das elektromechanische Schaltelement 12 oder eine Drehfeder hervorgerufen werden.

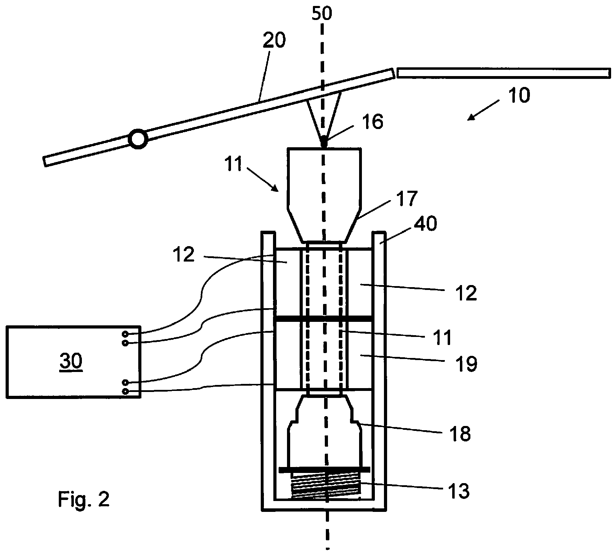

In Figur 2 ist eine weitere Ausführungsform der erfindungsgemäßen Betätigungsvorrichtung 10 aufgezeigt, wobei sich das elektromechanische Schaltelement 12 hierbei ebenfalls in dem erste Modus befindet, in dem das elektromechanische Schaltelement 12 eine Krafteinwirkung durch das Betätigungsmittel 11 bzw. das Aktivierungselement 17 sensieren kann. Zusätzlich zu dem ersten elektromechanischen Schaltelement 12, ist in Figur 2 ein weiteres elektromechanisches Schaltelement 19 angeordnet, welches ebenfalls sowohl als Sensor als auch als Aktor bzw. nur als Sensor oder nur als Aktor funktionieren kann. Das weitere elektromechanische Schaltelement 19 kann dabei eine Krafteinwirkung des Druckelements 18 sensieren, wodurch eine unsachgemäße Öffnung bzw. Bewegung des beweglichen Teils 20 detektiert werden kann. Wird das bewegliche Teil 20 unsachgemäß aus seiner ursprünglichen Stellung heraus bewegt, so kann das weitere elektromechanische Schaltelement 19 dies dadurch detektieren, dass das Druckelement 18, welches ebenfalls eine konisch respektive schräg-plane zulaufende Form aufweist, hierdurch eine Kapazitätsänderung in den elektromechanischen Schaltelement 19 sensieren und gleichzeitig aufgrund der Form des Druckelements 18 dieses von einem Herausbewegen des Betätigungsmittels 18 aus dem Gehäuse 40 heraus unterbinden. Hierbei kann das Druckelement 18 auch derart ausgestaltet sein, dass durch eine bestimmte Formgebung, eine mechanische Sperre oder ein mechanischer Widerstand, ein Herausbewegen verhindert. Dementsprechend wird auch von dem elektromechanischen Schaltelement 19 eine mechanische Kraft auf das Betätigungsmittel 11 ausgeübt. Erst wenn die Elektronikeinheit 30, welche zum einen mit dem erste elektromechanischen Element 12 und mit dem zweiten elektromechanischen Schaltelement 19 verbunden ist, diese freigibt, d.h. in den zweiten bzw. den Aktormodus schaltet, ziehen sich die elektromechanischen Schaltelemente 12 und 19 derart zusammen, dass ähnlich wie in Figur 1 beschrieben, genügend Platz in dem Gehäuse 40 ist, dass sich das Betätigungsmittel bzw. das Druckelement 18 mit seiner breitesten Stelle durch das Gehäuse 40 sich bewegen kann. Die Elektronikeinheit 30 ist derart ausgestaltet, dass eine Steuerung bzw. Regelung der beiden elektromechanischen Schaltelemente 12 und 19 unabhängig voneinander erzielt werden kann. Somit kann zum einen das elektromechanische Schaltelement 19 zum Beispiel in Verbindung mit einer Zentralverriegelung oder einem Passive-Entry System eines Fahrzeugs stehen und damit eine autorisierte Zugangsberechtigung realisieren. Dabei kann zum Beispiel durch ein Passiv-Entry System oder die freigegebene Zentralverrieglung, das elektromechanische Schaltelement 19 freigegeben werden, so dass nach Betätigung des Betätigungsmittels 11 durch Bewegen des beweglichen Teils 20, das elektromechanische Schaltelement 12 einen Öffnungswunsch durch den Benutzer sensieren und nach Verarbeitung des Signals durch die Elektronikeinheit 30, dass Betätigungsmittel 11 freigeben.

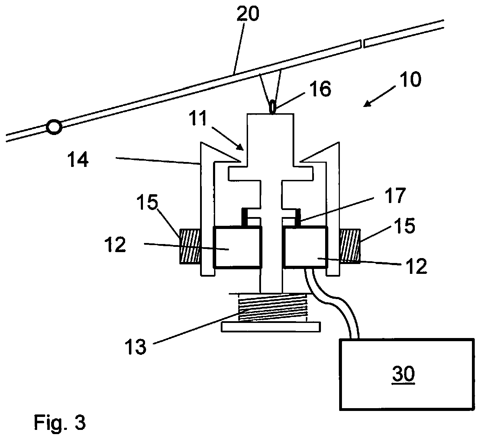

Die Figur 3 zeigt eine weitere Ausführungsform der erfindungsgemäßen Betätigungsvorrichtung 10, wobei ein Verriegelungsmechanismus 14 zusammen mit dem Betätigungsmittel 11 wirkt. Der Verriegelungsmechanismus 14 ist hierbei hackenförmig ausgebildet, sodass dieser mit einem Kragenelement des Betätigungsmittels 11 zusammenwirken kann. Der hakenförmige Verriegelungsmechanismus 14 verhindert dabei, dass das Betätigungsmittel 11 mit dem kragenförmige Teil, an dem Verriegelungsmechanismus 14 in seiner Schließstellung vorbeibewegt werden kann. Somit wird eine Bewegung des Betätigungsmittels 11 in Richtung des beweglichen Teils 20 unterbunden. Darüber hinaus bewirkt der Verriegelungsmechanismus 14 mit einem zweiten Federelement 15 und dem elektromechanischen Schaltelement 12 zusammen. Dabei ist die Federkraft des Federelementes 15 in dem ersten Modus des elektromechanischen Schaltelementes größer als die Kraft des elektromechanischen Schaltelementes 12, welche auf den Verriegelungsmechanismus 14 wirkt. Somit wird der Verriegelungsmechanismus 14 in einer Schließstellung gehalten, in der das Betätigungsmittel 11 nicht in Richtung des beweglichen Teils 20 bewegbar ist. An dem Betätigungsmittel 11 befindet sich in Figur 3 ein Aktivierungselement 17, welches bei einer Bewegung des Betätigungsmittels 11, die infolge einer Krafteinwirkung auf das bewegliche Teil 20 erfolgt, eine Kapazitätsänderung in dem elektromechanischen Schaltelement 12 hervorruft. Diese Kapazitätsänderung wird von der Elektronikeinheit 30 registriert und ausgewertet, sodass daraufhin das elektromechanische Schaltelement 12 in den zweiten Modus wechselt, in der das elektromechanische Schaltelement 12 eine Kraft auf den Verriegelungsmechanismus 14 ausübt, die größer als die Federkraft des Federelementes 15 ist. Somit wird der Verriegelungsmechanismus 14 in Richtung des Federelementes 15 gedrückt und das Betätigungsmittel 11 ist für eine Bewegung in Richtung des beweglichen Teils 20 freigegeben. Dabei wird das Betätigungsmittel 11 durch das Federelement 13 in Richtung des beweglichen Teils 20 durch die erzeugte Federkraft bewegt.

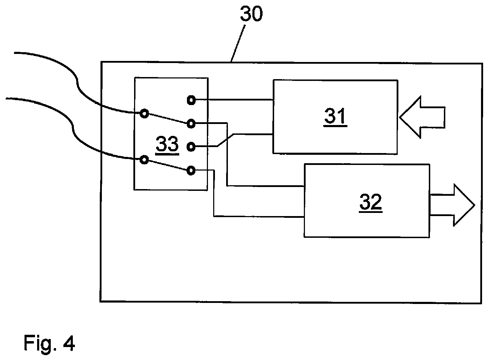

In Figur 4 ist die Elektronikeinheit 30 schematisch dargestellt. Dabei besteht die Elektronikeinheit 30 unter anderem aus einer Spannungsversorgung 31, welche die elektromechanischen Schaltelemente 12 und/oder 19 mit einer Spannung versorgt. Darüber hinaus weist die Elektronikeinheit 30 eine Sensorsteuerung 32 sowie einen Umschalter 33 auf. Die Sensorsteuerung 32 wertet dabei die Kapazitätsänderung infolge einer Krafteinwirkung auf das elektromechanische Schaltelement 12 und/oder 19 aus und gibt ein entsprechendes Signal an den Umschalter 33, welcher das elektromechanische Schaltelement 12 und/oder 19 von dem ersten Modus in den zweiten Modus schaltet. Durch das Umschalten vom ersten in den zweiten Modus oder umgekehrt wird in dem Umschalter 33 entweder die Spannungsversorgung 31 oder die Sensorsteuerung 32 mit den elektromechanischen Schaltelementen 12 und/oder 19 verschaltet.

### Bezugszeichenliste

- 10: Betätigungsvorrichtung
- 11: Betätigungsmittel
- 12: elektromechanisches Schaltelement
- 13: erstes Federelement
- 14: Verriegelungsmechanismus
- 15: zweites Federelement
- 16: Notfallmechanismus
- 17: Aktivierungselement
- 18: Druckelement
- 19: weiteres elektromechanisches Schaltelement
- 20: bewegliches Teil
- 30: Elektronikeinheit
- 31: Spannungsversorgung für 12, 19
- 32: Sensorsteuerung
- 33: Umschalter
- 40: Gehäuse

## Patentansprüche

1. Betätigungsvorrichtung (10) für ein bewegliches Teil (20), insbesondere eine Abdeckung einer Karosserieöffnung, mit zumindest einem Betätigungsmittel (11), mit zumindest einem elektromechanischen Schaltelement (12), **dadurch gekennzeichnet, dass** das elektromechanische Schaltelement (12) aus einem ersten Modus in einen zweiten Modus durch das Betätigungsmittel (11) bringbar ist, wobei in dem ersten Modus das elektromechanische Schaltelement (12) eine Betätigung durch das Betätigungsmittel (11) sensiert, und im zweiten Modus das elektromechanische Schaltelement (12) das Betätigungsmittel (11) freigibt, sodass das Betätigungsmittel (11) in Richtung bewegliches Teil (20) bewegbar ist, wobei das elektromechanische Schaltelement (12) ein elektroaktives Polymer (12) und/oder ein Piezoelement (12) aufweist.

2. Betätigungsvorrichtung (10) nach Anspruch 1,
**dadurch gekennzeichnet,**
**dass** eine Elektronikeinheit (30) die Modi des elektromechanischen Schaltelementes (12) steuert.

3. Betätigungsvorrichtung (10) nach Anspruch 1 oder 2,
**dadurch gekennzeichnet,**
**dass** an dem Betätigungsmittel (11) ein erstes Federelement (13) wirkt, wodurch das Betätigungsmittel (11) in seiner Position veränderbar ist.

4. Betätigungsvorrichtung (10) nach einem der vorhergehenden Ansprüche,
**dadurch gekennzeichnet,**
**dass** an dem elektromechanischen Schaltelement (12) ein Verriegelungsmechanismus (14) angeordnet ist, der durch das elektromechanische Schaltelement (12) in eine Offenstellung und eine Schließstellung bringbar ist, insbesondere dass der Verriegelungsmechanismus (14) in Wirkverbindung mit zumindest einem zweiten Federelement (15) steht.

5. Betätigungsvorrichtung (10) nach einem der vorhergehenden Ansprüche,
**dadurch gekennzeichnet,**
**dass** ein mechanischer Notfallmechanismus (16) vorgesehen ist, womit das bewegliche Teil (20) betätigbar ist, insbesondere das bewegliche Teil (20) aus einer Schließstellung in eine Offenstellung freigebbar ist.

6. Betätigungsvorrichtung (10) nach einem der vorhergehenden Ansprüche,
**dadurch gekennzeichnet,**
**dass** das Betätigungsmittel (11) zumindest ein Aktivierungselement (17) und/oder zumindest ein Druckelement (18) aufweist.

7. Betätigungsvorrichtung (10) nach einem der vorhergehenden Ansprüche,
**dadurch gekennzeichnet,**
**dass** das elektromechanische Schaltelement (12) und/oder die Elektronikeinheit (30) mit einem Steuergerät eines Fahrzeugs, insbesondere einer Zentralverriegelung und/oder einem Passiv Entry-System eines Fahrzeugs verbindbar ist.

8. Betätigungsvorrichtung (10) nach einem der vorhergehenden Ansprüche,
**dadurch gekennzeichnet,**
**dass** zumindest ein weiteres elektromechanisches Schaltelement (19) vorgesehen ist, das derart ausgebildet ist, einen autorisierten Öffnungsvorgang zu sensieren.

9. Betätigungsvorrichtung (10) nach einem der vorhergehenden Ansprüche,
**dadurch gekennzeichnet,**
**dass** das elektromechanische Schaltelement (12, 19) erst nach Sensierung in den zweiten Modus schaltbar ist.

## Claims

1. Actuating device (10) for a movable part (20), in particular a cover of a vehicle body opening, said actuating device comprising at least one actuator (11), and comprising at least one electromechanical switching element (12),
**characterized in that**
the electromechanical switching element (12) can be brought from a first mode into a second mode by the actuator (11), wherein, in the first mode, the electromechanical switching element (12) senses an actuation by the actuator (11), and, in the second mode, the electromechanical switching element (12) releases the actuator (11) such that the actuator (11) is movable in the direction of the movable part (20), wherein the electromechanical switching element (12) comprises an electroactive polymer (12) and/or a piezoelectric element (12).

2. Actuating device (10) according to claim 1,
**characterized in that**
an electronic unit (30) controls the modes of the electromechanical switching element (12).

3. Actuating device (10) according to claim 1 or 2,
**characterized in that**
a first spring element (13) acts on the actuator (11), as a result of which the position of the actuator (11) can be changed.

4. Actuating device (10) according to one of the preceding claims,
**characterized in that**
a locking mechanism (14), which can be brought into an open position and a closed position by the electromechanical switching element (12), is arranged on the electromechanical switching element (12), in particular **in that** the locking mechanism (14) is operatively connected to at least one second spring element (15).

5. Actuating device (10) according to one of the preceding claims,
**characterized in that**
a mechanical emergency mechanism (16) is provided, with which the movable part (20) can be actuated, in particular the movable part (20) can be released from a closed position into an open position.

6. Actuating device (10) according to one of the preceding claims,
**characterized in that**
the actuator (11) comprises at least one activation element (17) and/or at least one pressure element (18).

7. Actuating device (10) according to one of the preceding claims,
**characterized in that**
the electromechanical switching element (12) and/or the electronic unit (30) are connectable to a control device of a vehicle, in particular a central locking system and/or a passive entry system of a vehicle.

8. Actuating device (10) according to one of the preceding claims,
**characterized in that**
at least one further electromechanical switching element (19) is provided, which is configured in such a manner as to sense an authorized opening operation.

9. Actuating device (10) according to one of the preceding claims,
**characterized in that**
the electromechanical switching element (12, 19) can be switched into the second mode only after a sensing operation.

## Revendications

1. Ensemble d'actionnement (10) d'une partie mobile (20), en particulier du couvercle d'une ouverture d'une carrosserie, présentant au moins un moyen d'actionnement (11), au moins un élément électromécanique de commutation (12),
**caractérisé en ce que**
l'élément électromécanique de commutation (12) peut être amené par le moyen d'actionnement (11) d'un premier mode à un deuxième mode, l'élément électromécanique de commutation (12) détectant un actionnement par le moyen d'actionnement (11) dans le premier mode et l'élément électromécanique de commutation (12) libérant le moyen d'actionnement (11) dans le deuxième mode de telle sorte que le moyen d'actionnement (11) puisse être déplacé en direction de la partie mobile (20), l'élément électromécanique de commutation (12) présentant un polymère électroactif (12) et/ou un piézoélément (12).

2. Ensemble d'actionnement (10) selon la revendication 1, **caractérisé en ce qu'**une unité électronique (30) commande les modes de l'élément électromécanique de commutation (12).

3. Ensemble d'actionnement (10) selon les revendications 1 ou 2, **caractérisé en ce qu'**un premier élément élastique (13) agit sur le moyen d'actionnement (11) et permet de modifier la position du moyen d'actionnement (11).

4. Ensemble d'actionnement (10) selon l'une des revendications précédentes, **caractérisé en ce qu'**un mécanisme de verrouillage (14) qui peut être amené par l'élément électromécanique de commutation (12) dans une position d'ouverture et dans une position de fermeture est disposé sur l'élément électromécanique de commutation (12) et en particulier **en ce que** le mécanisme de verrouillage (14) coopère avec au moins un deuxième élément élastique (15).

5. Ensemble d'actionnement (10) selon l'une des revendications précédentes, **caractérisé en ce qu'**un mécanisme mécanique de secours (16) par lequel la partie mobile (20) peut être actionnée, la partie mobile (20) pouvant en particulier être libérée d'une position de fermeture pour être amenée dans une position d'ouverture, est prévu.

6. Ensemble d'actionnement (10) selon l'une des revendications précédentes, **caractérisé en ce que** le moyen d'actionnement (11) présente au moins un élément d'activation (17) et/ou au moins un élément de poussée (18).

7. Ensemble d'actionnement (10) selon l'une des revendications précédentes, **caractérisé en ce que** l'élément électromécanique de commutation (12) et/ou l'unité électronique (30) peuvent être reliés à un appareil de commande d'un véhicule, en particulier à un verrouillage central et/ou à un système passif d'entrée dans un véhicule.

8. Ensemble d'actionnement (10) selon l'une des revendications précédentes, **caractérisé en ce qu'**au moins un autre élément électromécanique de commutation (19) est prévu et est configuré de manière à détecter une opération autorisée d'ouverture.

9. Ensemble d'actionnement (10) selon l'une des revendications précédentes, **caractérisé en ce que** l'élément électromécanique de commutation (12) ne peut être commuté dans le deuxième mode qu'après détection.
